# EUROPÄISCHE PATENTSCHRIFT

(11) **EP 1 600 855 B1**
(45) Veröffentlichungstag und Bekanntmachung des Hinweises auf die Patenterteilung: **07.04.2010**
(21) Anmeldenummer: 05007627.2
(22) Anmeldetag: 07.04.2005
(51) Int. Cl.: G06F 9/46

(54) **Erzeugen und Verwenden von Speicherbelegungsinformationen bei einem tragbaren Datenträger**
Generating and using information about memory occupation in a portable device
Générer et utiliser de l'information sur l'occupation de la mémoire dans un dispositif portable

(30) Priorität: 15.04.2004 DE 102004018243
(43) Veröffentlichungstag der Anmeldung: 30.11.2005
(73) Patentinhaber: Giesecke & Devrient GmbH, 81677 München (DE)
(72) Erfinder: Baldischweiler, Michael, 81825 München (DE); Hildinger, Peter, 82319 Starnberg (DE); Kuhn, Torge, 82319 Starnberg (DE); Winkler, Michael, 81829 München (DE)
(74) Vertreter: Dendorfer, Claus

(56) Entgegenhaltungen:
- WO-A-03/081426
- US-A- 6 038 397
- AHO, SETHI, ULLMAN: "Compilers - Principles, Techniques, and Tools" 1987, ADDISON-WESLEY 014321 , XP002468304 * Seite 432 *
- BROOKS G ET AL: "A new approach to debugging optimized code" SIGPLAN NOTICES USA, Bd. 27, Nr. 7, Juli 1992 (1992-07), Seiten 1-11, XP002468303 ISSN: 0362-1340
- CILIO A G M ET AL: "A linker for effective whole-program optimizations" HIGH-PERFORMANCE COMPUTING AND NETWORKING. 7TH INTERNATIONAL CONFERENCE, HPCN EUROPE 1999. PROCEEDINGS SPRINGER-VERLAG BERLIN, GERMANY, 1999, Seiten 643-652, XP002465938 ISBN: 3-540-65821-1
- J. SJÖDIN, C. VON PLATEN: "Storage allocation for embedded processors" NTERNATIONAL CONFERENCE ON COMPILERS, ARCHITECTURE AND SYNTHESIS FOR EMBEDDED SYSTEMS, [Online] 2001, XP002465939 ISBN: 1-58113-399-5 Gefunden im Internet: URL:http://doi.acm.org/10.1145/502217.5022 21> [gefunden am 2008-01-21]
- VERMA M ET AL: "Data partitioning for maximal scratchpad usage" PROCEEDINGS OF THE ASP-DAC 2003. ASIA AND SOUTH PACIFIC DESIGN AUTOMATION CONFERENCE 2003 (CAT. NO.03EX627) IEEE PISCATAWAY, NJ, USA, 2003, Seiten 77-83, XP002465940 ISBN: 0-7803-7659-5
- "Linker and Libraries Guide" April 2003 (2003-04), SUN MICROSYSTEMS , SANTA CLARA, USA , XP002465941 * Seite 263 - Seite 280 *

## Beschreibung

Die Erfindung betrifft allgemein das technische Gebiet der Programmausführung durch tragbare Datenträger sowie das Gebiet des Erzeugens von Programmcode, der zur Ausführung durch tragbare Datenträger vorgesehen ist. Spezieller betrifft die Erfindung das Gebiet der Speicherbelegung in einem Arbeitsspeicher eines tragbaren Datenträgers. Ein tragbarer Datenträger im Sinne des vorliegenden Dokuments kann insbesondere eine Chipkarte (*smart card*) in diversen Bauformen oder ein Chipmodul oder ein sonstiges ressourcenbeschränktes System wie etwa eine Set-Top-Box sein.

Bekannte tragbare Datenträger weisen in der Regel mehrere Speicherfelder auf, die in unterschiedlichen Technologien ausgestaltet sind und demgemäß zu unterschiedlichen Zwecken genutzt werden. Als Programmspeicher eignet sich insbesondere ein maskenprogrammierter Festwertspeicher (ROM) oder ein nichtflüchtiger überschreibbarer Speicher (z.B. EEPROM oder FLASH-Speicher). Der maskenprogrammierte Festwertspeicher benötigt pro Speicherzelle die geringste Chipfläche und ist damit am kostengünstigsten. Es ist daher wünschenswert, möglichst viel Programmcode in diesem Speicher unterzubringen. Allerdings muß der Inhalt des maskenprogrammierten Festwertspeichers schon bei der Maskenherstellung des in den Datenträger eingebauten Halbleiterchips unveränderlich festgelegt werden. Programmcode, der zu diesem Zeitpunkt noch nicht vorliegt - dies können z.B. Anwendungsprogramme oder Patch-Programme zur Korrektur von Programmfehlern sein - kann daher nur in den nichtflüchtigen überschreibbaren Speicher eingespielt werden.

Im Zuge der Ausführung des Programmcodes wird Arbeitsspeicher benötigt, um Zwischenergebnisse und sonstige Daten abzulegen. Der Arbeitsspeicher ist in der Regel als flüchtiger Schreib-Lese-Speicher (RAM) ausgestaltet. Da eine Speicherzelle der Arbeitsspeichers ein Vielfaches der Chipfläche einer Speicherzelle des Programmspeichers benötigt, weisen typische Mikrocontroller für tragbare Datenträger nur relativ wenig Arbeitsspeicher auf. Es muß daher auf eine möglichst gute Nutzung des zur Verfügung stehenden Arbeitsspeichers geachtet werden.

Das Erfordernis einer guten Arbeitsspeichernutzung stellt sich insbesondere bei Mikrocontrollern mit einem Programmiermodell, gemäß dem lokale Variablen - in der Wortwahl des vorliegenden Dokuments schließt der Begriff "lokale Variable" Parameter bei Unterprogrammaufrufen ein - nicht in einem Stapelspeicher (*stack*) abgelegt werden. Bei solchen Mikrocontrollern, z.B. der 8051-Familie und deren Derivaten, werden die lokalen Variablen vielmehr in Speicherzellen des Arbeitsspeichers abgelegt, deren Adresse beim Kompilieren oder Binden des Programmcodes bestimmt wird.

Es ist in diesem Zusammenhang bekannt, bei der Erzeugung eines ausführbaren Grundprogrammpakets - z.B. eines Grundprogrammpakets, das Betriebssystemfunktionen oder Grundfunktionen eines Anwendungsprogramms aufweist und das in die ROM-Maske eingebracht wird - einen vorbestimmten Bereich im Arbeitsspeicher für lokale Variablen und sonstige Datenwerte zu reservieren. Nach einem zumindest internen Stand der Technik der Anmelderin kann im Hinblick auf die Funktionen des Grundprogrammpakets ferner ein Overlay-Mechanismus für die Nutzung des Arbeitsspeichers verwendet werden.

Gemäß der bekannten Vorgehensweise wird beim späteren Kompilieren und Binden eines Zusatzprogramms - z.B. eines Patch-Programms zur Korrektur eines Fehlers im Grundprogrammpaket oder eines Anwendungsprogramms, das Routinen des Grundprogrammpakets nutzt, oder eines Teils eines solchen Anwendungsprogramms - ein weiterer Bereich im Arbeitsspeicher für lokale Variablen und sonstige Daten des Zusatzprogramms reserviert. Dieser Bereich und seine Nutzung sind unabhängig von dem für das Grundprogrammpaket reservierten Arbeitsspeicherbereich. Wenn beispielsweise dem Grundprogrammpaket 200 Byte Arbeitsspeicher und dem Zusatzprogramm 100 Byte Arbeitsspeicher zugewiesen werden, so müssen insgesamt 300 Byte Arbeitsspeicher bereitgestellt werden. Es besteht jedoch eine Wahrscheinlichkeit, daß bei der tatsächlichen Programmausführung diese 300 Byte in dem meisten Fällen nicht vollständig genutzt werden.

Aus der US-A-6 038 397 ist ein Compilierungsverfahren bekannt, das darauf abstellt, den von einem ausführbaren Programm benutzten RAM-Speicherbereich zu minimieren. Um dies zu erreichen wird ein zu optimierendes Programm in mehrere Teilprozesse zerlegt. Sodann werden Datenreferenztabellen erzeugt, die angeben, wie die einzelnen Teilprozesse den Speicher mit Variablen belegen. Anhand der so entstehenden Speicherbelegungslandkarte wird ermittelt, welche Speicherbereiche nur vorübergehend benötigt werden und somit von nachfolgenden Teilprozessen unmittelbar wieder belegt werden können. Die bekannte Lösung ist auf die Optimierung eines abgeschlossenen, gegebenen Programmes gerichtet und benutzt nur Informationen, die aus der Analyse dieses Programmes selbst gewonnen wird. Angewandt auf ein Zusatzprogramm erlaubt sie es, den für das Zusatzprogramm zu reservierenden Arbeitsspeicherbereich klein zu halten. Außerhalb des zu reservierenden Arbeitsspeicherbereiches liegende Bereiche des Arbeitsspeichers werden in die bekannte Lösung nicht einbezogen.

Aufgabe der Erfindung ist es, eine Technik zur besonders guten Nutzung des Arbeitsspeichers bei der Programmausführung in einem tragbaren Datenträger bereitzustellen. In bevorzugten Ausgestaltungen soll diese Aufgabe insbesondere im Hinblick auf das Zusammenspiel zwischen einem im Festwertspeicher befindlichen Grundprogrammpaket und einem im nichtflüchtigen überschreibbaren Speicher befindlichen Zusatzprogramm gelöst werden.

Erfindungsgemäß wird diese Aufgabe ganz oder zum Teil gelöst durch Verfahren, tragbare Datenträger und Computerprogrammprodukte gemäß den unabhängigen Ansprüchen. Die abhängigen Ansprüche betreffen bevorzugte Ausgestaltungen der Erfindung.

Die Erfindung geht von der Grundüberlegung aus, daß bei der Programmausführung durch den tragbaren Datenträger in der Regel nicht alle vom Grundprogrammpaket angebotenen Funktionen oder Routinen genutzt werden. Entsprechend wird der für das Grundprogrammpaket reservierte Bereich im Arbeitsspeicher nicht vollständig benötigt. Die nicht benötigten Speicherzellen in diesem Bereich können dann zumindest zeitweise durch lokale Variablen des Zusatzprogramms belegt werden. Um eine solche verbesserte Speichernutzung bei der Programmausführung zu erzielen, werden bei der Erzeugung des ausführbaren Grundprogrammpakets Speicherbelegungsinformationen ermittelt und diese Informationen bei der Erzeugung des ausführbaren Zusatzprogramms ausgewertet.

Die durch die Erfindung erzielte Verbesserung der Nutzung des Arbeitsspeichers hat in der Praxis erhebliche Vorteile, weil der z.B. als RAM ausgebildete Arbeitsspeicher viel Chipfläche beansprucht und damit teuer ist. Durch den Einsatz der Erfindung kann somit für eine gegebene Anwendung ein einfacherer und damit kostengünstigerer Mikrocontroller eingesetzt werden. Alternativ kann ein vorgegebener Mikrocontroller für erweiterte oder zusätzliche Anwendungen eingesetzt werden.

Voraussetzung für die Mehrfachnutzung des Bereichs im Arbeitsspeicher sowohl durch das Grundprogrammpaket als auch durch das Zusatzprogramm ist natürlich, daß die Lebensdauer der Belegung dieses Bereichs durch das Zusatzprogramm sich nicht mit der Lebensdauer einer gegebenenfalls erfolgenden Belegung des Bereichs durch das Grundprogrammpaket überlappt. Diese Bedingung ist auf jeden Fall dann erfüllt, wenn der Bereich nur für lokale Variablen solcher Routinen des Grundprogrammpakets vorgesehen ist, die bei der Ausführung des Zusatzprogramms nie aufgerufen werden. In diesem Fall belegt das Grundprogrammpaket den entsprechenden Bereich bei der Programmausführung nicht, so daß die geforderte Überlappungsfreiheit mit der Belegung durch das Zusatzprogramm stets gegeben ist. In besonders einfachen Ausgestaltungen der Erfindung wird nur dieser Fall ausgewertet, während in Ausführungsalternativen auch vorgesehen sein kann, komplexere Lebensdaueranalysen durchzuführen.

In bevorzugten Ausführungsformen wird ein Teilabschnitt des Arbeitsspeichers, der eigentlich zur Verwendung durch das Grundprogrammpaket vorreserviert ist - und gemäß dem Stand der Technik auch ausschließlich durch das Grundprogrammpaket verwendet werden würde - zusätzlich für lokale Variablen und gegebenenfalls sonstige Datenwerte des Zusatzprogramms genutzt.

Vorzugsweise befindet sich das Grundprogrammpaket in einem Festwertspeicher, und das Zusatzprogramm befindet sich in einem nichtflüchtigen überschreibbaren Speicher des Datenträgers. In Ausführungsalternativen kann jedoch auch der Einsatz der Erfindung bei Datenträgern vorgesehen sein, die keinen maskenprogrammierten Festwertspeicher aufweisen, sondern den gesamten ausführbaren Programmcode in einem EEPROM oder FLASH-Speicher enthalten. Die Verwendung von Speicherbelegungsinformationen ist in diesem Fall insbesondere vorteilhaft, weil die Entwicklung eines speicherplatzsparenden Zusatzprogramms dann auch ohne Kenntnis des Grundprogrammpaket-Sourcecodes möglich ist.

Neben den Angaben über die Speicherbelegung durch lokale Variablen können die Speicherbelegungsinformationen weitere Hinweise zur Speicherbelegung durch die Routinen des Grundprogrammpakets und/oder zum Programmfluß im Grundprogrammpaket aufweisen. Insbesondere kann angegeben sein, welche Speicherbereiche durch statische Daten und/oder globale Daten des Grundprogrammpakets belegt werden. Ferner können die Speicherbelegungsinformationen so ausgestaltet sein, daß sich aus ihnen ein Aufrufbaum der Routinen des Grundprogrammpakets ableiten läßt. In manchen Ausgestaltungen kann vorgesehen sein, aufgrund der das Grundprogrammpaket betreffenden Speicherbelegungsinformationen sowie aufgrund der Programmfluß- und Speicherbedarfsanalyse des Zusatzprogramms eine Speicherbelegungsübersicht zu erzeugen, auf deren Grundlage dann die Plazierung der lokalen Variablen von Hand vorgenommen werden kann.

Das erfindungsgemäße Computerprogrammprodukt kann ein körperliches Medium mit gespeicherten Programmbefehlen sein, beispielsweise ein Halbleiterspeicher oder eine Diskette oder eine CD-ROM. Das Computerprogrammprodukt kann jedoch auch ein nicht-körperliches Medium sein, beispielsweise ein über ein Computernetzwerk übermitteltes Signal. Insbesondere kann das Computerprogrammprodukt ein Compiler und/oder ein Linker für einen Programmentwicklungsrechner sein, mit dem sich Speicherbelegungsinformationen und/oder ausführbare Zusatzprogramme erzeugen lassen. Das Computerprogrammprodukt kann jedoch auch ein hinsichtlich seiner Arbeitsspeichernutzung optimiertes Zusatzprogramm und/oder Speicherbelegungsinformationen, die aus einem Grundprogrammpaket ermittelt worden sind, enthalten.

In bevorzugten Ausgestaltungen weisen der Datenträger und/oder das Computerprogrammprodukt Merkmale auf, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung eines Ausführungsbeispiels und mehrerer Ausführungsalternativen hervor. Es wird auf die schematischen Zeichnungen verwiesen, in denen zeigen:
Fig. 1 ein Blockdiagramm mit Funktionseinheiten eines Datenträgers und Datenstrukturen nach einem Ausführungsbeispiel der Erfindung,
Fig. 2 eine beispielhafte Ansicht einer Speicherbelegung nach dem Stand der Technik,
Fig. 3 eine beispielhafte Ansicht einer Speicherbelegung nach einem Ausführungsbeispiel der Erfindung,
Fig. 4 eine Darstellung von Datenstrukturen bei der Erzeugung des Grundprogrammpakets sowie des Zusatzprogramms,
Fig. 5 eine Darstellung von Analysestufen bei der Erzeugung des Zusatzprogramms, und
Fig. 6 eine Darstellung von Datenstrukturen der Speicherbelegungsinformationen, des Grundprogrammpakets und des Zusatzprogramms.

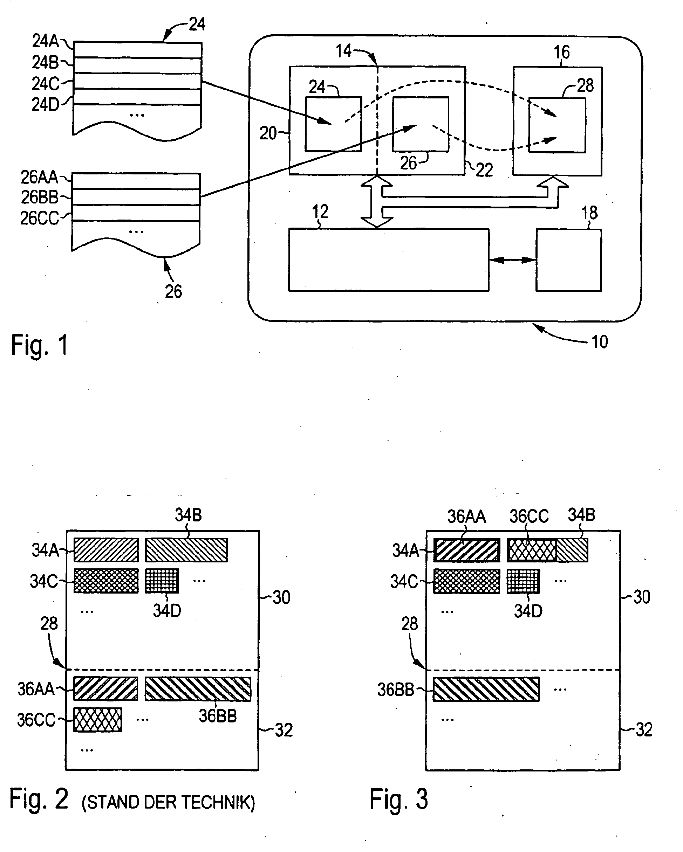

Der in Fig.1 gezeigte Datenträger 10 weist einen Ein-Chip-Mikrocontroller mit einem Prozessor 12, einem Programmspeicher 14, einem Arbeitsspeicher 16 und einer Schnittstellenschaltung 18 zur kontaktlosen oder kontaktgebundenen Kommunikation auf. Im vorliegend beschriebenen Ausführungsbeispiel ist der Programmspeicher 14 teils als maskenprogrammierter Festwertspeicher 20 (ROM - *read only memory*) und teils als nichtflüchtiger überschreibbarer Speicher 22 (EEPROM - *electrically erasable programmable read only memory*) ausgebildet. Der Arbeitsspeicher 16 ist ein flüchtiger Schreib-Lese-Speicher (RAM - *random access memory*)*.*

In dem Festwertspeicher 20 befindet sich ein Grundprogrammpaket 24, das bei der Herstellung des Mikrocontrollers in dessen ROM-Maske eingebracht wurde. In unterschiedlichen Ausgestaltungen kann das Grundprogrammpaket 24 z.B. ein Betriebssystem des Datenträgers 10 und/ oder ein Anwendungsprogramm und/oder eine Hilfsprogrammsammlung (*toolbox*) sein. Das Grundprogrammpaket 24 stellt mehrere extern aufrufbare Routinen 24A, 24B, 24C, 24D - im folgenden zusammenfassend mit 24x bezeichnet - zur Verwendung durch Zusatzprogramme bereit. In Fig.1 ist beispielhaft ein solches Zusatzprogramm 26 gezeigt, das in den nichtflüchtigen überschreibbaren Speicher 22 des Datenträgers 10 eingespielt wurde. Das Zusatzprogramm 26 weist seinerseits mehrere Routinen 26AA, 26BB, 26CC - im folgenden zusammenfassend mit 26xx bezeichnet - auf. Ferner nutzt das Zusatzprogramm 26 einige - aber in der Regel nicht alle - der von dem Grundprogrammpaket 24 bereitgestellten Routinen 24x.

Wenn das Grundprogrammpaket 24 ein Betriebssystem ist, dann kann das Zusatzprogramm 26 z.B. ein Anwendungsprogramm (*application*) oder ein Patch-Programm zur Fehlerkorrektur oder Funktionserweiterung oder Anpassung dieses Betriebssystems sein. Ist das Grundprogrammpaket 24 ein Anwendungsprogramm, so ist das Zusatzprogramm 26 vorzugsweise ein Patch-Programm, das Fehler dieses Anwendungsprogramms korrigiert oder kundenspezifische Anpassungen vornimmt oder zusätzliche Funktionen bereitstellt. Wenn das Grundprogrammpaket 24 eine Hilfsprogrammsammlung (*toolbox*) ist, dann ist das Zusatzprogramm 26 vorzugsweise ein Anwendungsprogramm, daß diese Hilfsprogramme nutzt. Es versteht sich, daß der Programmspeicher 14 außer dem Grundprogrammpaket 24 und dem Zusatzprogramm 26 weitere Programme enthalten kann, die in Fig. 1 aus Gründen der besseren Übersichtlichkeit nicht gezeigt sind.

Der Prozessor 12 hat die Eigenschaft, daß bei der Programmausführung lokale Variablen nicht in einem Stapelspeicher (*stack*)*,* sondern in zur Compilierungs- oder Bindezeit vorbestimmten Speicherzellen des Arbeitsspeichers 16 gehalten werden. Dies ist z.B. bei Mikrocontrollern der Familie SLE 66 der Firma Infineon Technologies AG und allgemein bei Mikrocontrollern, die auf der 8051-Architektur beruhen, der Fall. Die gerade genannte Speicherbelegung ist in Fig.1 durch gestrichelte Pfeile veranschaulicht, die vom Grundprogrammpaket 24 und dem Zusatzprogramm 26 in einen zur Speicherung von lokalen Variablen vorgesehenen Abschnitt 28 des Arbeitsspeichers 16 verweisen. In der Wortwahl des vorliegenden Dokuments soll der Begriff "lokale Variablen" insbesondere auch Variablen umfassen, die zur Parameterübergabe beim Aufruf von Funktionen, Prozeduren und Methoden - allgemein "Routinen" - verwendet werden.

In Fig. 2 ist eine typische Belegung des für lokale Variablen reservierten Abschnitts 28 nach dem Stand der Technik gezeigt. Der Abschnitt 28 ist in zwei Teilabschnitte 30, 32 untergliedert. Der erste Teilabschnitt 30 ist zur Verwendung durch das Grundprogrammpaket 24 reserviert, während der zweite Teilabschnitt 32 für das Zusatzprogramm 26 vorgesehen ist. In Ausführungsalternativen kann der erste Teilabschnitt 30 auch allgemein für den gesamten im Festwertspeicher 20 befindlichen Programmcode vorgesehen sein, und der zweite Teilabschnitt 32 kann für das Zusatzprogramm 26 und für alle weiteren im nichtflüchtigen überschreibbaren Speicher 22 befindlichen Programme reserviert sein.

Der Grund für die Aufteilung des Abschnitts 28 in die beiden Teilabschnitte 30, 32 ist, daß nach dem Stand der Technik der Vorgang des Erzeugens des Grundprogrammpakets 24 völlig unabhängig von dem Vorgang des Erzeugens des Zusatzprogramms 26 verläuft. Insbesondere werden zwischen diesen Vorgängen keinerlei Informationen bezüglich des Programmflusses und der Verwendung von Speicherbereichen ausgetauscht. Beim Übersetzen und Binden des Zusatzprogramms 26 muß daher angenommen werden, daß der gesamte vorreservierte Teilabschnitt 30 von dem Grundprogrammpaket 24 vollständig benötigt wird.

In Fig. 2 ist beispielhaft veranschaulicht, daß reservierte Speicherbereiche 34A, 34B, 34C, 34D - im folgenden mit 34x bezeichnet -, die sich im ersten Teilabschnitt 30 befinden, für lokale Variablen der Routinen 24x vorgesehen sind. Entsprechend sind Speicherbereiche 36AA, 36BB, 36CC - im folgenden mit 34x bezeichnet - im zweiten Teilabschnitt 32 für lokale Variablen der Routinen 26xx des Zusatzprogramms 26 reserviert. Diese Speicherbelegung erfolgt nach dem Stand der Technik unabhängig davon, ob die reservierten Speicherbereiche 34x, 36xx während des Betriebs des Datenträgers 10 benötigt werden oder nicht.

Fig. 3 zeigt beispielhaft, wie der Abschnitt 28 in derselben Situation wie in Fig. 2 nach einem Ausführungsbeispiel der Erfindung belegt werden würde. Auch hier sind im Teilabschnitt 30 die Speicherbereiche 34x für die Routinen 24x des Grundprogrammpakets 24 vorreserviert. Es werden jedoch beim Übersetzen und/oder Binden des Zusatzprogramms 26 Informationen ausgewertet, die zumindest angeben, welche Bereiche des Arbeitsspeichers 16 von den einzelnen Routinen 24x des Grundprogrammpakets 24 zur Speicherung lokaler Variablen benötigt werden. Ferner wird der Programmfluß zumindest des Zusatzprogramms 26 analysiert, um Routinen 24x des Grundprogrammpakets 24 zu ermitteln, die nicht aufgerufen werden und für die daher kein Speicherplatz im Arbeitsspeicher 16 erforderlich ist.

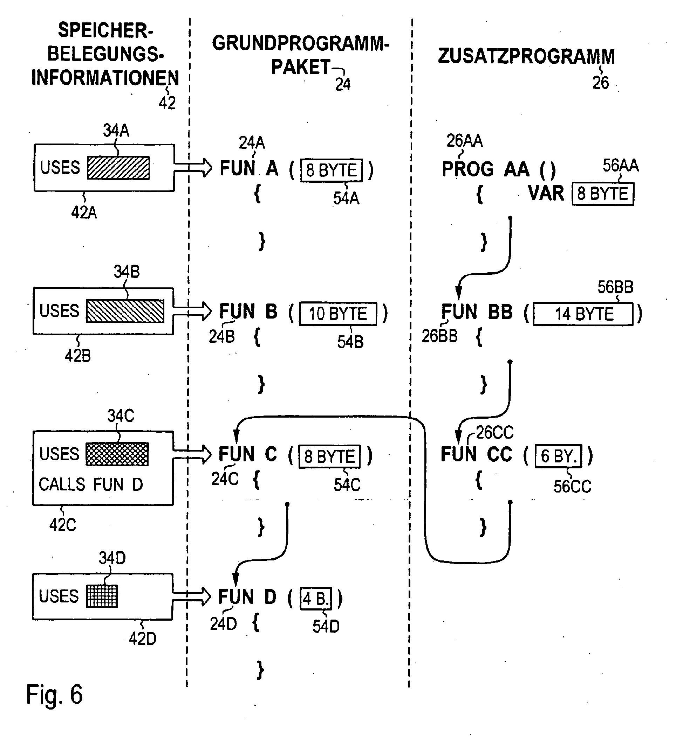

In der beispielhaften Darstellung von Fig. 3 ist das Ergebnis der gerade genannten Analyseschritte, das die Speicherbereiche 34C und 34D tatsächlich von dem Grundprogrammpaket 24 benötigt werden, weil die Routinen 24C und 24D von dem Zusatzprogramm 26 unmittelbar oder mittelbar aufgerufen werden. Die Speicherbereiche 34A und 34B werden dagegen nicht benötigt, weil das Zusatzprogramm 26 die Routinen 24A und 24B nicht aufruft; diese Situation wird später noch in Fig. 6 veranschaulicht.

Die nicht benötigten Speicherbereiche 34A und 34B können nun, obwohl sie sich in dem eigentlich für das Grundprogrammpaket 24 reservierten Teilabschnitt 30 befinden, von dem Zusatzprogramm 26 genutzt werden. So ist beispielsweise in Fig. 3 der Speicherbereich 36AA, der für lokale Variablen der Routine 26AA des Zusatzprogramms 26 vorgesehen ist, innerhalb des schon für die Routine 24A des Grundprogrammpakets 24 vorreservierten Speicherbereichs 34A angeordnet, und der Speicherbereich 36CC nimmt einen Teil des vorreservierten Speicherbereichs 34B ein. Für den Speicherbereich 36BB konnte innerhalb des ersten Teilabschnitts 30 kein freier Platz hinreichender Größe identifiziert werden, so daß dieser Speicherbereich 36BB weiterhin im zweiten Teilabschnitt 32 angeordnet wird.

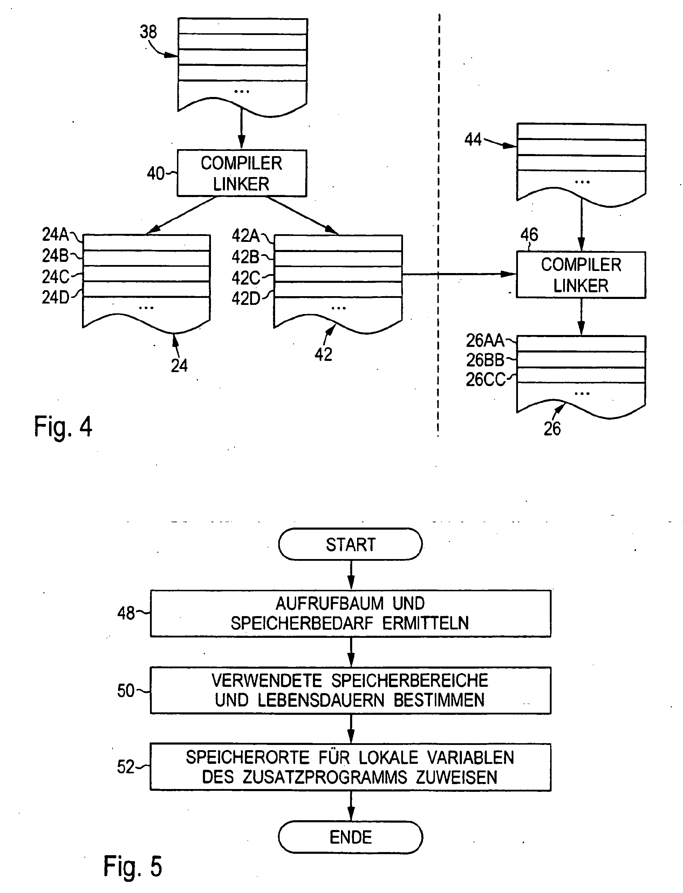

Die zur Erzeugung des Grundprogrammpakets 24 und des Zusatzprogramms 36 erforderlichen Schritte sind in Fig. 4 veranschaulicht. Bei der Maskenherstellung für den Mikrocontroller des Datenträgers 10 wird ein Grundprogrammpaket-Sourcecode 38 in einem Schritt 40 kompiliert und gebunden, um den ausführbaren Code des Grundprogrammpakets 24 zu erzeugen. Es versteht sich, daß Schritt 40 in der Praxis oft in mehrere Teilschritte untergliedert ist, bei denen zunächst einzelne Teile des Sourcecodes 38 durch einen Compiler in Objektcode übersetzt werden und die Objektcode-Dateien dann durch einen Linker (Bindeprogramm) gebunden werden.

Zusätzlich zu dem Grundprogrammpaket 24 werden als Ergebnis von Schritt 40 ferner die bereits erwähnten Speicherbelegungsinformationen erzeugt, die in Fig. 4 mit dem Bezugszeichen 42 gezeigt sind. Allgemein enthalten die Speicherbelegungsinformationen 42 Daten bezüglich der verwendeten Speicherbereiche und gegebenenfalls auch bezüglich des Programmflusses des Grundprogrammpakets 24, so daß aus diesen Daten die jeweilige Lebensdauer jedes durch das Grundprogrammpaket 24 belegten Speicherbereichs ermittelbar ist. Ein solcher Speicherbereich kann beispielsweise statisch, global oder lokal verwendet werden und demgemäß eine dauernde oder auf eine einzelne Routine 24x beschränkte Lebensdauer aufweisen.

Im vorliegenden, einfachen Ausführungsbeispiel ist in den Speicherbelegungsinformationen 42 für jede Routine 24x des Grundprogrammpakets 24 je ein Eintrag 42A, 42B, 42C, 42D - im folgenden zusammenfassend mit 42x bezeichnet - enthalten. Jeder Eintrag 42x gibt im vorliegenden Ausführungsbeispiel an, welcher Speicherbereich 34x von der zugeordneten Routine 24x des Grundprogrammpakets 24 für lokale Variablen belegt wird und welche weiteren Routinen 24x innerhalb des Grundprogrammpakets 24 aufgerufen werden. In Ausführungsalternativen kann der Speicherbedarf weiterer aufgerufener Routinen 24x unmittelbar in die Speicherbelegungsinformationen 42x der aufrufenden Routine 24x aufgenommen werden; die Angabe der aufgerufenen Routinen 24x und die Analyse des Programmflusses innerhalb des Grundprogrammpakets 24 erübrigen sich dann.

Das Grundprogrammpaket 24 wird zur Herstellung des Datenträgers 10 verwendet. Die zugehörigen Speicherbelegungsinformationen 42 können zu einem späteren Zeitpunkt bei der Erzeugung des Zusatzprogramms 26 eingesetzt werden. Ein besonderer Vorteil der hier beschriebenen Technik ist, daß die Speicherbelegungsinformationen 42 auch an externe Entwickler weitergegeben werden können, ohne daß dadurch die Vertraulichkeit des in der Regel geheimen Grundprogrammpaket-Sourcecodes 38 beeinträchtigt werden würde.

Zur Erzeugung des Zusatzprogramms 26 wird ein Zusatzprogramm-Sourcecode 44 in einem Schritt 46 - der seinerseits mehrere Teilschritte aufweisen kann - kompiliert und gebunden. Schritt 46 kann im zeitlichen Zusammenhang mit Schritt 40 ausgeführt werden; in der Regel wird das Zusatzprogramm 26 jedoch deutlich später als das Grundprogrammpaket 24 in einem separaten Entwicklungsprozeß erzeugt. Das Zusatzprogramm 26 kann z. B. bei der Komplettierung oder Initialisierung oder Personalisierung des Datenträgers 10 oder sogar erst während des Betriebs des Datenträgers 10 in den nichtflüchtigen überschreibbaren Speicher 22 geladen werden.

In Schritt 46 führen ein Compiler und/oder ein Linker (Bindeprogramm) auf Grundlage des Zusatzprogramm-Sourcecodes 44 und der Speicherbelegungsinformationen 42 die in Fig. 5 veranschaulichten Analysevorgänge aus. In einer ersten Stufe 48 wird der Aufrufbaum und der für das Zusatzprogramm 26 benötigte Speicherplatz im Arbeitsspeicher 16 ermittelt. Der Aufrufbaum umfaßt die Aufrufe innerhalb des Zusatzprogramms 26, Aufrufe zwischen dem Zusatzprogramm 26 und dem Grundprogrammpaket 24 und im vorliegenden Ausführungsbeispiel auch Aufrufe innerhalb der Routinen 24x des Grundprogrammpakets 24.

In einer zweiten Stufe 50 werden allgemein unter Verwendung der in den Speicherbelegungsinformationen 42 enthaltenen Einträge 42x die vom Grundprogrammpaket 24 verwendeten Speicherbereiche 34x lokalisiert und deren Lebensdauer bestimmt. In der hier beschriebenen, einfachen Ausgestaltung erfolgt keine komplexe Lebensdaueranalyse. Es wird vielmehr ein Speicherbereich 34x nur dann zur Verwendung durch das Zusatzprogramm 26 herangezogen, wenn dieser Speicherbereich 34x durch keine vom Zusatzprogramm 26 tatsächlich aufgerufene Routine 24x des Grundprogrammpakets 24 genutzt wird. Mit anderen Worten wird hinsichtlich der Benutzung des Speicherbereichs 34x durch das Grundprogrammpaket 24 nur zwischen den Lebensdauern Null (= keine Benutzung) und größer als Null (= Benutzung) unterschieden.

Die Prüfung in der zweiten Stufe 50 kann z.B. erfolgen, indem sukzessive alle von dem Zusatzprogramm 26 genutzten Routinen 24x des Grundprogrammpakets 24 und die jeweils genutzten Speicherbereiche 34x ermittelt werden. Hierbei werden Aufrufe zwischen zwei Routinen 24x innerhalb des Grundprogrammpakets 24 berücksichtigt. Als Ergebnis der zweiten Stufe 50 ist nun der tatsächliche Arbeitsspeicherbedarf der direkt oder indirekt aufgerufenen Routinen 24x des Grundprogrammpakets 24 bekannt.

In der Regel ist dieser tatsächliche Arbeitsspeicherbedarf des Grundprogrammpakets 24 geringer als der im ersten Teilabschnitt 30 vorreservierte Speicherplatz. Die freien Speicherzellen können dann in einer dritten Stufe 52 für das Zusatzprogramm 26 genutzt werden. Hierzu werden, soweit möglich, lokale Variablen des Zusatzprogramms 26 an Speicherorte im ersten Teilabschnitt 30 gelegt, die von den tatsächlich aufgerufenen Routinen 24x des Grundprogrammpakets 24 nicht benötigt werden.

Fig. 6 veranschaulicht beispielhaft die bereits beschriebenen Datenstrukturen, die bei der Ausführung des Verfahrens gemäß Fig. 5 zu einer Speicherbelegung wie in Fig. 3 gezeigt führen. Die Routinen 24x des Grundprogrammpakets 24 weisen hier beispielhaft lokale Variablen 54A, 54B, 54C, 54D - zusammenfassend mit 54x bezeichnet - auf, die 8 Byte, 10 Byte, 8 Byte, bzw. 4 Byte Speicherplatz im Arbeitsspeicher 16 benötigen. Die Routinen 26xx des Zusatzprogramms 26 beinhalten lokale Variablen 56AA, 56BB, 56CC - zusammenfassend mit 56xx bezeichnet - mit einem Speicherplatzbedarf von 8 Byte, 14 Byte bzw. 6 Byte.

Bei der Erzeugung des Grundprogrammpakets 24 in Schritt 40 wurden die Speicherbereiche 34x für die lokalen Variablen 54x vorreserviert. Die Lage und Größe dieser Speicherbereiche 34x wurde in den entsprechenden Einträgen 42x der Speicherbelegungsinformationen 42 angegeben. Ferner enthält der Eintrag 42C einen Hinweis über die Aufrufstruktur innerhalb des Grundprogrammpakets 24, nämlich den Hinweis, daß durch die dem Eintrag 42C zugeordnete Routine 24C die Routine 24D aufgerufen wird.

Bei der Erzeugung des Zusatzprogramms 26 in Schritt 46 wird in der ersten Stufe 48 der in Fig. 6 durch gekrümmte Pfeile angedeutete Aufrufbaum - im vorliegenden Beispiel eine lineare Aufrufstruktur - ermittelt. Es wird ferner der Speicherbedarf für die lokalen Variablen 56xx des Zusatzprogramms 26 bestimmt. In der zweiten Stufe 50 wird durch Auswertung der Speicherbelegungsinformationen 24 festgestellt, daß die Speicherbereiche 34C und 34D benötigt werden, die Speicherbereiche 34A und 34B dagegen frei sind, weil die entsprechenden Routinen 24A, 24B des Grundprogrammpakets 24 nicht aufgerufen werden. Demgemäß kann in der dritten Stufe 52 der Speicherbereich 34A als Bereich 36AA zur Speicherung der lokalen Variablen 56AA des Zusatzprogramms 26 zugewiesen werden, und die lokalen Variablen 56CC können innerhalb des Speicherbereichs 34B in dem Speicherbereich 36CC angelegt werden.

Insgesamt macht das gerade beschriebene Verfahren denjenigen Speicherplatz im Arbeitsspeicher 16 zusätzlich für das Zusatzprogramm 26 verfügbar, der für solche Routinen 24x des Grundprogrammpakets 24 vorreserviert war, die tatsächlich von dem Zusatzprogramm 16 nicht benutzt werden. In Ausführungsalternativen können weitergehende Belegungs- und Lebensdaueranalysen vorgenommen werden, um Situationen zu erkennen, bei denen ein temporär benötigter Datenwert des Zusatzprogramms 26 in einem nur während dieser Zeitspanne nicht benötigten Speicherbereich 34x im ersten Teilabschnitt 30 abgelegt werden kann. Stets muß jedoch sichergestellt werden, daß sich die Lebensdauern der Belegung eines gemeinsam genutzten Speicherbereichs 34x, 36xx durch das Grundprogrammpaket 24 und das Zusatzprogramm 26 nicht überlappen.

## Patentansprüche

1. Verfahren zum Erzeugen eines von einem tragbaren Datenträger (10) ausführbaren Zusatzprogramms (26), wobei der tragbare Datenträger einen Prozessor (12) einen Programmspeicher (14) und einen Arbeitsspeicher (16) aufweist, wobei das Zusatzprogramm (26) dazu eingerichtet ist, bei der Ausführung durch den tragbaren Datenträger (10) zumindest eine Routine (24x) einer Mehrzahl von extern aufrufbaren Routinen (24x), die von einem Grundprogrammpaket (24) bereitgestellt werden, aufzurufen,
**dadurch gekennzeichnet, daß**
- beim Erzeugen des Grundprogrammpakets (24) Speicherbelegungsinformationen (42) für die einzelnen Routinen (24x) des Grundprogrammpakets (24x) erzeugt werden, die zumindest angeben, welche Bereiche (34x) in einem Arbeitsspeicher (16) des Datenträgers (10) von diesen Routinen (24x) mit lokalen Variablen (54x) belegt werden,
- beim Erzeugen des Zusatzprogramms (26) die Speicherbelegungsinformationen (42) ausgewertet werden, und
- das Zusatzprogramm (26) derart erzeugt wird, daß es dazu eingerichtet ist, mindestens eine lokale Variable (56xx) in einem Bereich (36xx) im Arbeitsspeicher des Datenträgers zu speichern, der gemäß den Speicherbelegungsinformationen (42) auch von mindestens einer der Routinen (24x) des Grundprogrammpakets (24) verwendet wird, wobei jedoch die Lebensdauer der Belegung dieses Bereichs (36xx) durch das Zusatzprogramm (26) überlappungsfrei mit der Lebensdauer einer gegebenenfalls erfolgenden Belegung dieses Bereichs (36xx) durch das Grundprogrammpaket (24) ist.

2. Verfahren nach Anspruch 1, **dadurch gekennzeichnet, daß** der durch das Zusatzprogramm (26) genutzte Bereich (36xx) von keiner der von dem Zusatzprogramm (26) aufgerufenen Routinen (24x) des Grundprogrammpakets (24) benötigt wird.

3. Verfahren nach Anspruch 1 oder Anspruch 2, **dadurch gekennzeichnet, daß** sich der durch das Zusatzprogramm (26) genutzte Bereich (36xx) in einem zur Verwendung durch das Grundprogrammpaket (24) vorreservierten Teilabschnitt (30) des Arbeitsspeichers (16) befindet.

4. Verfahren nach einem der Ansprüche 1 bis 3, **dadurch gekennzeichnet, daß** das Grundprogrammpaket (24) zur Speicherung in einem Festwertspeicher (20) des Datenträgers (10) vorgesehen ist, und daß das Zusatzprogramm (26) zur Speicherung in einem nichtflüchtigen überschreibbaren Speicher (22) des Datenträgers (10) vorgesehen ist.

5. Verfahren nach einem der Ansprüche 1 bis 4, **dadurch gekennzeichnet, daß** die Speicherbelegungsinformationen (42) für die einzelnen Routinen (24x) des Grundprogrammpakets (24) ferner angeben, welche Bereiche im Arbeitsspeicher (16) des Datenträgers (10) von den Routinen (24x) des Grundprogrammpakets mit statischen und/ oder globalen Daten belegt werden.

6. Verfahren nach einem der Ansprüche 1 bis 5, **dadurch gekennzeichnet, daß** die Speicherbelegungsinformationen (42) für die einzelnen Routinen (24x) des Grundprogrammpakets (24) ferner angeben, welche weiteren Routinen (24x) des Grundprogrammpakets (24) aufgerufen werden.

7. Verfahren nach einem der Ansprüche 1 bis 6, **dadurch gekennzeichnet, daß** das Verfahren zur Ausführung durch einen Compiler und/oder Linker vorgesehen ist.

8. Verfahren nach einem der Ansprüche 1 bis 7, **dadurch gekennzeichnet, daß** das Zusatzprogramm (26) ein Anwendungsprogramm ist, und daß das Grundprogrammpaket (24) ein Betriebssystem oder eine Hilfsprogrammsammlung (*toolbox*) ist.

9. Verfahren nach einem der Ansprüche 1 bis 7, **dadurch gekennzeichnet, daß** das Zusatzprogramm (26) ein Patch-Programm zur Korrektur eines Fehlers oder Erweiterung der Funktionalität oder Anpassung des Grundprogrammpakets (24) ist.

10. Tragbarer Datenträger (10), insbesondere Chipkarte oder Chipmodul, mit einem Prozessor (12), mindestens einem Programmspeicher (14) und einem Arbeitsspeicher (16), **dadurch gekennzeichnet, daß** der Programmspeicher (14) ein Grundprogrammpaket (24) und ein durch ein Verfahren nach einem der Ansprüche 1 bis 4 erzeugtes Zusatzprogramm (26) enthält.

11. Computerprogrammprodukt, insbesondere Compiler und/oder Linker, das Programmbefehle zur Ausführung durch mindestens einen Prozessor aufweist, die den mindestens einen Prozessor zur Ausführung eines Verfahrens nach einem der Ansprüche 1 bis 7 veranlassen.

## Claims

1. Method for generating an additional program (26) executable by a portable data carrier (10), wherein the portable data carrier comprises a processor (12), a program memory (14) and a working memory (16), wherein the additional program (26) is configured to call, during the execution by the portable data carrier (10), at least one routine (24x) of a plurality of externally callable routines (24x) provided by a basic program package (24),
**characterised in that**,
- while the basic program package (24) is generated, memory occupancy information (42) for the individual routines (24x) of the basic program package is generated which at least indicates which areas (34x) in a working memory (16) of the data carrier (10) are occupied by these routines (24x) with local variables (54x),
- the memory occupancy information (42) is evaluated during the generation of the additional program (26), and
- the additional program (26) is generated so as to be configured to store at least one local variable (56xx) in an area (36xx) in the working memory of the data carrier, which, according to the memory occupancy information (42), is also utilised by at least one of the routines (24x) of the basic program package (24), wherein the life span of the occupancy of this area (36xx) by the additional program (26), however, does not overlap the life span of a possible occupancy of this area (36xx) by the basic program package (24).

2. Method according to claim 1, **characterised in that** the area (36xx) utilised by the additional program (26) is required by none of the routines (24x) of the basic program package (24) that are called by the additional program (26).

3. Method according to claim 1 or claim 2, **characterised in that** the area (36xx) utilised by the additional program (26) is located in a portion (30) of the working memory (16) reserved in advance for utilisation by the basic program package (24).

4. Method according to any one of the claims 1 to 3, **characterised in that** the basic program package (24) is provided for storage in a read-only memory (20) of the data carrier (10), and that the additional program (26) is provided for storage in a non-volatile re-writeable memory (22) of the data carrier (10).

5. Method according to any one of the claims 1 to 4, **characterised in that** the memory occupancy information (42) for the individual routines (24x) of the basic program package (24) further indicate which areas in the working memory (16) of the data carrier (10) are occupied by the routines (24x) of the basic program package with static and/or global data.

6. Method according to any one of the claims 1 to 5, **characterised in that** the memory occupancy information (42) for the individual routines (24x) of the basic program package (24) further indicate which further routines (24x) of the basic program package (24) are called.

7. Method according to any one of the claims 1 to 6, **characterised in that** the method is provided for execution by a compiler and/or linker.

8. Method according to any one of the claims 1 to 7, **characterised in that** the additional program (26) is an application program and that the basic program package (24) is an operating system or a collection of tools (toolbox).

9. Method according to any one of the claims 1 to 7, **characterised in that** the additional program (26) is a patch program for the correction of an error or the expansion of the functional capability or the adaptation of the basic program package (24).

10. Portable data carrier (10), in particular a chip card or chip module, comprising a processor (12), at least one program memory (14) and a working memory (16), **characterised in that** the program memory (14) includes a basic program package (24) and an additional program (26) generated by a method according to any one of the claims 1 to 4.

11. Computer program product, in particular a compiler and/or linker, comprising program instructions for execution by at least one processor, which cause the at least one processor to execute a method according to any one of the claims 1 to 7.

## Revendications

1. Procédé pour générer un programme complémentaire (26) exécutable par un support de données portable (10), ledit support de données portable comportant un processeur (12), une mémoire de programme (14) et une mémoire de travail (16), le programme complémentaire (26) étant prévu pour appeler au moins une routine (24x) d'une pluralité de routines (24x) externes appelables et délivrées par un progiciel de base (24) lors de l'exécution par le support de données portable (10),
**caractérisé en ce que**
- lors de la génération du progiciel de base (24), des informations d'occupation de mémoire (42) sont générées pour les différentes routines (24x) du progiciel de base (24), lesquelles indiquent au moins quelles zones (34x) sont occupées par ces routines (24x) avec des variables locales (54x) dans une mémoire de travail (16) du support de données (10),
- lors de la génération du programme complémentaire (26), les informations d'occupation de mémoire (42) sont analysées, et **en ce que**
- le programme complémentaire (26) est généré de manière à être prévu pour sauvegarder au moins une variable locale (56xx) dans une zone (36xx) de la mémoire de travail du support de données, laquelle est conformément aux informations d'occupation de mémoire (42) également utilisée par au moins une des routines (24x) du progiciel de base (24), la durée de vie de l'occupation de cette zone (36xx) par le programme complémentaire (26) ne recoupant toutefois pas la durée de vie d'une occupation éventuelle de cette zone (36xx) par le progiciel de base (24).

2. Procédé selon la revendication 1, **caractérisé en ce que** la zone (36xx) utilisée par le programme complémentaire (26) n'est nécessitée par aucune des routines (24x) du progiciel de base (24) appelées par le programme complémentaire (26).

3. Procédé selon la revendication 1 ou la revendication 2, **caractérisé en ce que** la zone (36xx) utilisée par le programme complémentaire (26) se trouve dans une section partielle (30) de la mémoire de travail (16) réservée préalablement pour une l'utilisation par le progiciel de base (24).

4. Procédé selon l'une des revendications 1 à 3, **caractérisé en ce que** le progiciel de base (24) est prévu pour la sauvegarde dans une mémoire morte (20) du support de données (10), et **en ce que** le programme complémentaire (26) est prévu pour la sauvegarde dans une mémoire réinscriptible non volatile (22) du support de données (10).

5. Procédé selon l'une des revendications 1 à 4, **caractérisé en ce que** les informations d'occupation de mémoire (42) pour les différentes routines (24x) du progiciel de base (24) indiquent en outre quelles zones de la mémoire de travail (16) du support de données (10) sont occupées par les routines (24x) du progiciel de base avec des données statiques et/ou globales.

6. Procédé selon l'une des revendications 1 à 5, **caractérisé en ce que** les informations d'occupation de mémoire (42) pour les différentes routines (24x) du progiciel de base (24) indiquent en outre quelles autres routines (24x) du progiciel de base (24) sont appelées.

7. Procédé selon l'une des revendications 1 à 6, **caractérisé en ce que** le procédé est prévu pour être exécuté par un compilateur et/ou un éditeur de liens.

8. Procédé selon l'une des revendications 1 à 7, **caractérisé en ce que** le programme complémentaire (26) est un programme d'application, et **en ce que** le progiciel de base (24) est un système d'exploitation ou une collection de programmes complémentaires (*boîte à outils*).

9. Procédé selon l'une des revendications 1 à 7, **caractérisé en ce que** le programme complémentaire (26) est un programme patch pour la correction d'une erreur ou l'extension de fonctionnalité ou l'adaptation du progiciel de base (24).

10. Support de données portable (10), en particulier carte à puce ou module à puce, avec un processeur (12), au moins une mémoire de programme (14) et une mémoire de travail (16), **caractérisé en ce que** la mémoire de programme (14) comprend un progiciel de base (24) et un programme complémentaire (26) généré par un procédé selon l'une des revendications 1 à 4.

11. Produit de programme informatique, en particulier compilateur et/ou éditeur de liens, comportant des instructions de programme pour l'exécution par au moins un processeur, lesquelles engagent le ou les processeurs à exécuter un procédé selon l'une des revendications 1 à 7.
